Europäisches Patentamt

European Patent Office

Office européen des brevets

(11) Numéro de publication: **0 331 236**

**A1**

## (12) DEMANDE DE BREVET EUROPEEN

(21) Numéro de dépôt: **89200432.6**

(51) Int. Cl.⁴: **H04N 7/133**

(22) Date de dépôt: **22.02.89**

(30) Priorité: **29.02.88 FR 8802445**

(43) Date de publication de la demande:
**06.09.89 Bulletin 89/36**

(84) Etats contractants désignés:
**DE FR GB SE**

(71) Demandeur: **LABORATOIRES
D'ELECTRONIQUE ET DE PHYSIQUE
APPLIQUEE L.E.P.
3, Avenue Descartes
F-94450 Limeil-Brévannes(FR)**

(84) **FR**

Demandeur: **N.V. Philips'
Gloeilampenfabrieken
Groenewoudseweg 1
NL-5621 BA Eindhoven(NL)**

(84) **DE GB SE**

(72) Inventeur: **Chantelou, Olivier
SOCIETE CIVILE S.P.I.D. 209 rue de
l'Université
F-75007 PARIS(FR)**

(74) Mandataire: **Landousy, Christian et al
Société Civile S.P.I.D. 209, Rue de
l'Université
F-75007 Paris(FR)**

(54) **Procédé et dispositif de codage de signaux vidéo numériques, et dispositif de décodage correspondant.**

(57) Procédé de codage d'images converties en signaux vidéo numériques selon un format composé de blocs tridimensionnels desdits signaux, caractérisé en ce qu'il comprend les étapes préalables suivantes :

(a) estimation de mouvement principal d'image à image pour associer à chaque image un vecteur de déplacement, par rapport à l'image précédente, ce vecteur dit principal étant celui pour lequel la différence d'image à image est minimale, et ;

(b) conversion de balayage, en vue d'une délimitation du format des blocs tridimensionnels par division de la suite des signaux vidéo correspondant aux images en groupes correspondant chacun à N images consécutives et définition, à l'intérieur de chacun de ces groupes, desdits blocs tridimensionnels à partir d'une part de M lignes et de P points par ligne dans le plan des images et d'autre part de N plans successifs correspondant aux N images du groupe, les N blocs bidimensionnels de M lignes x P points qui composent chaque bloc tridimensionnel d'un même groupe étant, d'une image à la suivante, décalés spatialement dudit vecteur de déplacement estimé pour chaque image.

# PROCEDE ET DISPOSITIF DE CODAGE DE SIGNAUX VIDEO NUMERIQUES, ET DISPOSITIF DE DECODAGE CORRESPONDANT

La présente invention concerne un procédé de codage d'images converties en signaux vidéo numériques selon un format composé de blocs tridimensionnels desdits signaux.

L'invention concerne également un dispositif de codage pour la mise en oeuvre d'un tel procédé, ainsi qu'un dispositif de décodage correspondant.

Cette invention trouve une application essentielle dans le domaine de la télévision, pour la transmission et/ou l'enregistrement de signaux de télévision. Le dispositif de codage selon l'invention est alors mis en place dans l'étage d'émission du système de transmission, et le dispositif de décodage correspondant dans sa partie réception.

La transmission ou l'enregistrement de signaux vidéo sous forme numérique permet de réduire considérablement l'influence du bruit de canal ou de lecture sur la qualité de l'image restituée et permet d'inclure facilement ces signaux numériques dans des réseaux numériques de type téléphonique. Cependant la numérisation d'une séquence d'images de télévision se traduit par un débit très élevé, qui en général ne peut pas être transmis ou enregistré directement sur les supports existants (ce débit est de 216 Mbit/s pour des signaux de télévision en couleur numérisés, suivant l'avis 601 du CCIR). Il est donc indispensable de réduire ce débit pour adapter le signal aux débits pratiques.

Le brevet US-A-4394774 décrit une méthode qui permet de réduire ce débit d'un facteur 10 à 20. Cette technique, qui repose sur l'utilisation de transformations orthogonales, permet de tirer profit de la redondance entre échantillons voisins à l'intérieur de l'image : elle consiste à diviser l'image en blocs de taille identique et à appliquer à chaque bloc une transformation orthogonale qui a la propriété de décorréler les échantillons du bloc en concentrant l'énergie sur un petit nombre d'échantillons.

Afin de profiter également de la redondance d'image à image présente dans les parties fixes de l'image, cette technique est souvent combinée avec une technique de prédiction inter-image. Selon cette technique, on transmet soit le bloc luimême (mode intra-image), soit la différence entre ce bloc et le bloc de même position spatiale dans l'image précédente après codage et décodage (mode inter-image), de manière à transmettre le bloc d'énergie minimale.

Cette opération de prédiction d'image à image introduit donc une récursivité temporelle du codage, c'est-à-dire que le décodage d'une image n'est possible que si l'on dispose de l'image précédente décodée. Cette caractéristique entraîne qu'une erreur apparaissant à la réception ou lors de la lecture de la bande risque de se maintenir sur plusieurs images, en fait tant que le bloc sur lequel cette erreur est apparue est codé en mode interimage.

De plus, cette récursivité est incompatible avec l'enregistrement magnétique grand public, car elle interdit un accès aléatoire aux images, accès qui est cependant nécessaire à la réalisation du mode "recherche rapide avec visualisation". Dans certains cas, on remédie à cet inconvénient en codant une image sur N en mode intra-image, mais, comme cela dégrade la qualité des images restituées, N est choisi grand pour limiter cette dégradation, ce qui limite la portée de l'amélioration.

Un but de l'invention est de proposer un procédé de codage de signaux vidéo permettant de tirer profit de la corrélation d'image à image sans introduire de récursivité d'image à image, c'est-à-dire compatible avec l'enregistrement magnétique grand public et peu sensible aux erreurs de canal.

L'invention concerne à cet effet un procédé de codage caractérisé en ce qu'il comprend les étapes préalables suivantes :

(a) estimation de mouvement principal d'image à image pour associer à chaque image un vecteur de déplacement, par rapport à l'image précédente, ce vecteur dit principal étant celui pour lequel la différence d'image à image est minimale, et ;

(b) conversion de balayage, en vue d'une délimitation du format des blocs tridimensionnels par division de la suite des signaux vidéo correspondant aux images en groupes correspondant chacun à N images consécutives et définition, à l'intérieur de chacun de ces groupes, desdits blocs tridimensionnels à partir d'une part de M lignes et de P points par ligne dans le plan des images et d'autre part de N plans successifs correspondant aux N images du groupe, les N blocs bidimensionnels de M lignes x P points qui composent chaque bloc tridimensionnel d'un même groupe étant, d'une image à la suivante, décalés spatialement dudit vecteur de déplacement estimé pour chaque image.

Le procédé ainsi proposé permet d'exploiter la redondance temporelle des signaux grâce à la décorrélation réalisée par la transformation orthogonale dans les parties fixes des images sans déplacement principal, mais aussi dans le cas d'un mouvement global de la scène ou de la caméra, et même dans le cas où un mouvement affecte une grande partie de la scène. Dans ces deux derniers cas, le procédé proposé est supérieur au procédé utilisant les modes inter et intra-image, car il exploite la corrélation inter-image alors que le procédé inter/intra-image ne peut tenir compte de ces déplacements.

Par ailleurs, comme son effet est limité à N images, ce procédé n'introduit aucune récursivité d'image à image lors du codage et assure donc une bonne immunité au bruit et une compatibilité avec le mode "recherche rapide avec visualisation" prévu dans les magnétoscopes.

Ce procédé est particulièrement efficace lorsqu'il est utilisé pour réduire le débit de signaux vidéo de format d'images non entrelacé. Si les signaux disponibles sont entrelacés, on réalise avant codage une conversion de format produisant des signaux vidéo non entrelacés.

Le document EP-0255289 décrit un procédé et un dispositif de codage de signaux vidéo numériques dans lesquels sont prévues notamment les étapes suivantes :

- découpage des images en blocs tridimensionnels comprenant d'une part m lignes et n points par ligne dans le plan des images, avec m = n = 6 dans l'exemple décrit, et d'autre part des plans successifs (2 dans l'exemple décrit) correspondant à autant d'images successives et de positions et dimensions identiques dans ces images successives ;
- détection de mouvement dans chacun de ces blocs, en vue de l'émission d'un code distinct selon que le bloc courant est mobile, quasiment immobile ou immobile ;
- codage bidimensionnel moyen des blocs lorsqu'ils sont considérés comme immobiles ou quasi-immobiles, ou codage tridimensionnel de ces blocs quand ils sont considérés comme mobiles.

Il apparaît donc que les blocs tridimensionnels considérés ont une forme temporelle bien définie, répétitive et fixée a priori. La détection de mouvement qui s'opère à l'intérieur de chacun d'eux est destinée à simplifier le traitement lorsqu'il y a absence de mouvement, en ramenant les blocs tridimensionnels à des blocs bidimensionnels calculés par une opération de moyenne arithmétique.

Dans le cas présent, il n'y a au contraire aucune différence de traitement entre les blocs tridimensionnels, qui sont et restent traités comme tels. La détection de mouvement n'est pas limitée ici à une réduction du nombre des données de codage par suppression du caractère tridimensionnel des blocs considérés comme immobiles, mais est au contraire complétée par une estimation de ce mouvement, exprimée à l'aide d'un vecteur de mouvement qui permet de construire successivement chaque bloc tridimensionnel à partir du premier bloc bidimensionnel qui le compose.

Ainsi, chaque bloc tridimensionnel se trouve-t-il constitué non pas de blocs bidimensionnels définis a priori et de position spatiale identique, mais de blocs bidimensionnels présentant entre eux une certaine corrélation spatiale et associés les uns aux autres a posteriori en fonction de décalages spatiaux correspondant aux vecteurs de déplacement préalablement déterminés, ce qui entraîne une redondance temporelle d'informations permettant ultérieurement de réduire très efficacement le nombre de données de codage correspondant à ces blocs tridimensionnels.

Un autre but de l'invention est de proposer un exemple simple de réalisation d'un dispositif de codage de signaux vidéo numériques permettant la mise en oeuvre du procédé de codage défini plus haut.

A cet effet, le dispositif de codage selon l'invention, qui comprend nctamment un circuit de codage de valeurs numériques représentatives desdits signaux, est caractérisé :
- en ce qu'il comprend également, préalablement à ce circuit, un circuit d'estimation de mouvement principal d'image à image et un circuit de conversion de balayage ;
- en ce que ledit circuit d'estimation de mouvement principal comprend lui-même un registre de stockage, à partir des échantillons d'entrée qu'il reçoit, d'échantillons représentatifs de chaque image, une première et une deuxième mémoires pour effectuer en alternance l'écriture, dans l'une d'elles, de l'ensemble des échantillons représentatifs d'une image dite image courante et, simultanément, la lecture, dans l'autre des deux mémoires, des échantillons représentatifs d'une image dite image précédemment écrite, un soustracteur de calcul d'erreur inter-image par différence entre les échantillons lus et les échantillons d'entrée correspondants, un circuit de calcul de valeur absolue, un circuit de calcul d'erreur cumulée, et un circuit de détermination d'erreur cumulée minimale et de calcul du déplacement associé à ladite erreur cumulée minimale, dont la sortie est un vecteur de déplacement de l'image courante par rapport à l'image précédente et est fournie d'une part au circuit de conversion de balayage et d'autre part au circuit de codage ;
- en ce que ledit circuit de conversion de balayage comprend une troisième et une quatrième mémoires de stockage d'échantillons d'entrée en nombre correspondant à la longueur temporelle souhaitée pour les blocs tridimensionnels, lesdites mémoires fonctionnant également en bascule, et un circuit de constitution desdits blocs tridimensionnels par association, en nombre correspondant à ladite longueur temporelle de ces blocs, de blocs spatiaux bidimensionnels décalés, l'un par rapport au suivant, du vecteur de déplacement correspondant déterminé par le circuit d'estimation de mouvement principal.

Si les signaux vidéo sont de format non entrelacé, le dispositif proposé est utilisé tel quel. Si au contraire ces signaux sont de format entrelacé, le dispositif est précédé d'un circuit de conversion de format entrelacé en format non entrelacé.

Les particularités de l'invention apparaîtront maintenant de façon plus détaillée dans la description qui suit et dans les dessins annexés, donnés à titre d'exemples non limitatifs et dans lesquels :

- les figures 1 et 2 montrent des exemples de réalisation respectivement d'un dispositif de codage pour la mise en oeuvre du procédé de codage selon l'invention et du dispositif de décodage correspondant ;

- les figures 3 et 4 montrent des exemples de réalisation du circuit d'estimation de mouvement principal et du circuit de conversion de balayage de la figure 1 ;

- la figure 5 montre un exemple de réalisation du circuit de codage de la figure 1, et les figures 6a et 6b représentent respectivement deux types de balayage des données pour leur lecture dans ledit circuit de codage.

Avant de décrire l'invention elle-même, on rappellera qu'il est connu, notamment du document US-A-4394774 cité précédemment, d'opérer un codage de signaux vidéo numériques selon les étapes suivantes : transformation orthogonale, normalisation, quantification, codage proprement dit, et régulation de débit.

Chaque image étant divisée en blocs de M lignes et P points par ligne, l'objet de la transformation orthogonale bidimensionnelle classique des signaux numériques est d'obtenir, pour chaque bloc considéré successivement, une suite bidimensionnelle de coefficients plus indépendants que les valeurs disponibles avant transformation. Des mesures statistiques ont en effet montré la très forte corrélation entre points voisins d'une trame ou d'une image, et les coefficients obtenus par la transformation orthogonale sont caractérisés par une réduction de cette corrélation.

La normalisation opère une pondération des coefficients ainsi obtenus, en les multipliant ou en les divisant par un facteur de normalisation lié à un ou plusieurs paramètres, dont au moins le débit instantané des données disponibles à l'issue des étapes du procédé de codage et, éventuellement, des paramètres liés au contenu lui-même des blocs subissant le codage. La quantification, linéaire ou à pas variable, convertit la valeur normalisée de chaque coefficient, exprimée avec une virgule flottante, en une valeur entière, soit par un simple arrondi, soit par troncature en prenant la partie entière de la valeur avant quantification.

Le codage des valeurs normalisées et quantifiées est alors réalisé à l'aide de tables de valeurs, en général codées selon un code de Huffman et représentant soit des valeurs de coefficients (codage à longueur variable), soit des longueurs de plages (codage par plages). Les valeurs codées disponibles à débit variable à l'issue de cette opération sont alors, grâce à la présence d'une régulation de débit, restituées avec un débit constant, au moins une information liée à cette régulation de débit étant renvoyée en amont pour fixer, comme on l'a dit ci-dessus, la valeur du facteur de normalisation des coefficients.

Conformément à l'invention, le procédé de codage qui fait l'objet de la présente demande comprend les étapes préalables suivantes : d'une part une étape dite d'estimation de mouvement principal d'image à image, d'autre part une étape dite de conversion de balayage.

L'étape d'estimation de mouvement permet d'associer à chaque image, par rapport à l'image précédente, un vecteur de déplacement principal pour lequel la différence d'image à image est minimale. L'étape de conversion de balayage réalise une lecture originale des signaux successifs, en ce sens que la suite continue des images est divisée en groupes de N images à l'intérieur de chacun desquels sont constitués des blocs tridimensionnels composés de M lignes et de P points par ligne dans le plan des images, et de N plans successifs correspondant aux N images du groupe. Dans chaque bloc tridimensionnel, les N blocs bidimensionnels de M lignes x P points sont, d'une image à la suivante, décalés spatialement du vecteur de déplacement estimé pour chaque image. La réduction de corrélation est alors effectuée par une transformation orthogonale tridimensionnelle qui, de même que les étapes de traitement ultérieur déjà rappelées, concerne maintenant les blocs tridimensionnels constitués conformément à l'invention.

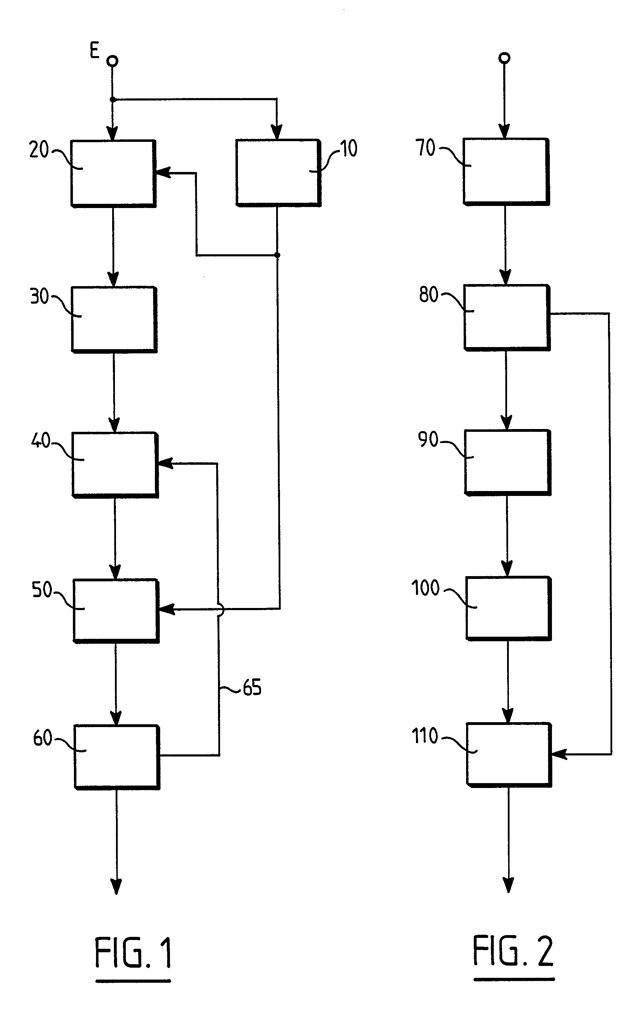

Pour la mise en oeuvre du procédé de codage selon l'invention, un exemple de réalisation d'un dispositif de codage est représenté sur la figure 1, ainsi que le dispositif de décodage correspondant sur la figure 2. Ces deux figures montrent des dispositifs travaillant sur des images de format non entrelacé avec une transformée orthogonale tridimensionnelle du type transformée en cosinus discret (DCT) appliquée à des blocs de taille 8 lignes x 8 points x 4 images.

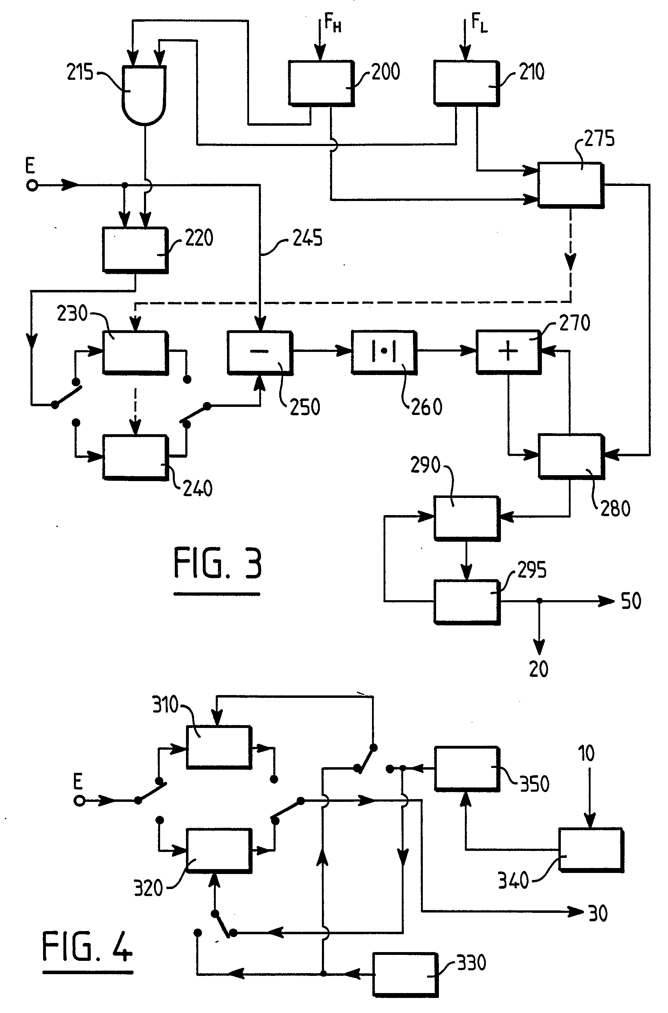

Comme indiqué sur la figure 1, le dispositif de codage selon l'invention comprend tout d'abord un circuit 10 d'estimation de mouvement principal, représenté plus en détail sur la figure 3. Sur cette figure 3, un registre 220 reçoit ligne par ligne, sur son entrée E également représentée sur la figure 1, les échantillons d'image et sélectionne un échantillon par bloc (par exemple par bloc de 16 points et 16 lignes dans l'image, grâce à des circuits 200 et 210 de division par 16 de la fréquence d'horloge $F_H$ (ou fréquence des points) et de la fréquence ligne $F_L$). Un circuit ET logique 215 prévu en sortie des circuits 200 et 210 commande l'enregistrement dans le registre 220 de l'échantillon présent sur l'entrée E. Cet échantillon est ensuite enregistré dans l'une des deux mémoires 230 et 240, ainsi que tous les autres échantillons représentatifs de la même image. Pendant ce temps, les échantillons représentatifs de l'image précédente sont lus dans l'autre des deux mémoires 230 et 240.

Lorsque tous les échantillons représentatifs de l'image courante ont été enregistrés, c'est-à-dire à la fin de l'image, le rôle des deux mémoires 230 et 240 est inversé : lorsque les premiers échantillons de l'image suivante arrivent à l'entrée du circuit d'estimation 10, les échantillons représentatifs de l'image courante sont lus dans l'une des mémoires 230 ou 240 avec des commandes de lecture décalées de 8 périodes lignes et 8 périodes points par rapport aux commandes du circuit 220. Ainsi les échantillons de l'image suivante provenant directement de l'entrée E par l'intermédiaire de la connexion de liaison 245 arrivent sur l'une des entrées d'un soustracteur 250, pendant que, sur l'autre entrée de ce soustracteur, l'échantillon présent correspond au point représentatif le plus proche spatialement de l'échantillon arrivant sur ladite connexion.

La position relative dudit échantillon par rapport au point représentatif présent à l'entrée du soustracteur 250 est le déplacement correspondant à l'erreur inter-image calculée par ce soustracteur. Ainsi le soustracteur 250 et le circuit de calcul de valeur absolue 260 fournissent pour chaque point représentatif la valeur absolue des différences inter-images associées aux vecteurs de déplacement considérés ici dans une zone de ±8 points par image et de ±8 lignes par image.

Un circuit de calcul de déplacement 275 détermine, à partir des restes des divisions par 16 de la fréquence des points $F_H$ et de la fréquence ligne $F_L$, le déplacement associé à chaque erreur sortant du circuit de calcul de valeur absolue 260. Ce déplacement, comprenant une composante horizontale et une composante verticale, est obtenu par décalage du reste de la division de la fréquence des points $F_H$ (respectivement de la fréquence ligne), défini de 0 à 15, de -8 points (respectivement lignes), par compensation de l'avance de la lecture des mémoires 230 et 240 (de 8 points, respectivement 8 lignes) par rapport à la commande du registre 220 et par compensation du retard introduit par les calculs réalisés à l'aide des circuits 250 et 260 (soustracteur et circuit de calcul de valeur absolue). Ce déplacement permet de lire dans la mémoire 280, pour le déplacement en question, l'erreur cumulée sur les points représentatifs précédents de l'image, erreur qui est calculée par l'additionneur 270, par addition à l'erreur élémentaire courante sortant du circuit de calcul de valeur absolue 260. La nouvelle valeur est alors stockée dans la mémoire 280 à la place de la précédente.

Ainsi, en accumulant, avec l'additionneur 270 et une mémoire 280, les termes élémentaires de tous les points représentatifs d'une image pour un déplacement donné, une recherche de déplacement simplifié selon la méthode dite de corrélation par bloc (en anglais : block matching method) ou selon une méthode de même type est réalisée. La détermination du vecteur choisi est alors réalisée par un circuit de comparaison 290 et par un registre 295 qui déterminent séquentiellement l'erreur inter-image cumulée minimale.

A la fin de l'image, le registre 295, qui est destiné à stocker l'erreur minimale et le déplacement associé, est initialisé à la valeur maximale de l'erreur. Le contenu de la mémoire 280 est ensuite lu consécutivement pour tous les déplacements. Le circuit de comparaison 290 compare alors la valeur de l'erreur cumulée contenue dans le registre 295 à celle qui provient de la mémoire 280. Si l'erreur contenue dans ce registre 295 est inférieure ou égale à celle provenant de la mémoire 280, le contenu du registre n'est pas modifié. Dans le cas contraire, le registre 295 stocke la nouvelle valeur d'erreur provenant de la mémoire 280 et le déplacement associé.

Lorsque toutes les erreurs cumulées ont été soumises au circuit de comparaison 290, le registre 295 contient donc le déplacement qui minimise l'erreur cumulée. Ce déplacement est alors défini comme celui de l'image courante par rapport à l'image précédente et, à ce titre, envoyé d'une part vers un circuit 20 de conversion de balayage (voir la figure 1) et d'autre part, en vue de son multiplexage et de sa transmission au dispositif de décodage selon l'invention, vers un circuit de codage 50 décrit plus loin.

Le circuit 20 de conversion de balayage comprend, comme indiqué sur la figure 4, deux mémoires 310 et 320, ici de quatre images (contenu correspondant à la longueur temporelle des blocs tridimensionnels), fonctionnant en bascule : pendant que les échantillons des quatre images courantes provenant de l'entrée du dispositif de codage sont écrits dans l'une des mémoires 310 ou 320 à l'aide d'un générateur d'adresse 330, l'autre mémoire 320 ou 310 fournit successivement tous les blocs tridimensionnels des quatre images précédentes et, pour chaque bloc tridimensionnel successivement, les échantillons des quatre blocs bidimensionnels dont il est constitué et qui appartiennent aux quatre images successives. Les blocs tridimensionnels sont constitués, on le rappelle, de quatre blocs spatiaux bidimensionnels décalés l'un par rapport au suivant du vecteur de déplacement estimé par le circuit 10 et stockés dans une mémoire 340, à l'aide de quatre compteurs d'adresse, un par image, prévus dans le générateur d'adresse 350 et qui sont initialisés par des valeurs points et lignes décalées (d'une image à l'autre) du vecteur de déplacement estimé pour ces images stockées dans la mémoire 340.

Un circuit 30 de transformation orthogonale tridimensionnelle, prévu (voir la figure 1) en sortie du circuit 20 de conversion de balayage, réalise la transformation orthogonale tridimensionnelle par la mise en cascade de trois circuits de transformation orthogonale monodimensionnelle séparés par des mémoires de conversion de balayage. On passe ainsi d'un balayage par ligne à un balayage par colonne, puis du balayage par colonne au balayage image à image, de la manière décrite dans le brevet US-A-394-774, en introduisant une étape supplémentaire pour réaliser la transformation selon la troisième dimension temporelle.

Un circuit de normalisation et de quantification 40 reçoit les échantillons transformés par le circuit 30 et réalise la normalisation et la quantification de ces échantillons par exemple de la manière décrite dans la demande de brevet français n° 87 13 429.

Dans ce circuit, tel que décrit dans ladite demande sans que ce soit là la seule réalisation possible, l'opération de normalisation est réalisée par division de la sortie du circuit de conversion de balayage par un paramètre Ki déterminé comme indiqué ci-après. Ce paramètre $K_i$ est considéré comme dépendant d'une part de la place, dans le bloc courant, du coefficient se présentant sur l'entrée "dividende" du circuit effectuant cette division, c'est-à-dire du coefficient obtenu une fois la conversion de balayage opérée. Ce paramètre Ki dépend d'autre part de la norme moyenne $N_m$ sur le bloc, c'est-à-dire du taux de remplissage de la mémoire de régulation de débit prévue comme indiqué plus loin.

Le paramètre $K_i$ est également considéré comme dépendant de la classe d'activité du bloc courant, qui, selon que le bloc considéré est uniforme ou quasi-uniforme ou au contraire qu'il contient des contours de plus ou moins fort contraste, va traduire la plus ou moins grande importance de la luminance moyenne attachée au bloc considéré. Plusieurs variantes de définition de la classe peuvent être retenues. Le critère d'activité qui a été ici adopté est de rechercher dans un bloc l'expression max $F_i(u,v)$, avec i = 2 à (u x v), $F_i(u,v)$ étant la valeur du coefficient d'ordre i après transformation orthogonale et conversion de balayage, et (u x v) étant le nombre total de coefficients du bloc. On exclut en effet de cette recherche le premier coefficient. Ce coefficient, situé en tête de la matrice des coefficients de chaque bloc, est en effet codé d'une manière particulière (par exemple, quantification linéaire puis codage par neuf bits) pour éviter que des différences de luminance d'un bloc à l'autre soient perçues par l'oeil. Mais d'autres critères de définition de l'activité pourraient être retenus, par exemple la valeur de la somme des coefficients élevés au carré.

La place dans le bloc courant est fournie par l'indice i qui affecte chaque coefficient. La norme moyenne sur le bloc courant, qui est une valeur d'autant plus élevée que la mémoire de régulation de débit est plus remplie, est fournie par une connexion 65 provenant de la sortie de ladite mémoire de régulation de débit.

La classe d'activité, dans l'exemple ici décrit, est fournie par comparaison, à des seuils, de la valeur absolue des coefficients (à l'exception du premier). Dans le cas présent, trois seuils et donc quatre classes d'activité ont été retenus. Les seuils ont été préalablement définis, par exemple soit à l'aide de tests subjectifs, en fonction de la classification que l'on estime préférable sur un certain nombre d'images de référence, soit en imposant une équirépartition des blocs dans les différentes classes, l'activité la plus faible correspondant donc au cas où le bloc considéré est pratiquement uniforme, ou avec des contours peu contrastés.

En fonction de la classe ainsi définie et de la place dans le bloc fournie par l'indice i, une mémoire interne au circuit de normalisation et de quantification fournit un coefficient $G_i$ qui est envoyé vers un circuit de calcul de norme, celui-ci délivrant finalement le paramètre $K_i$ qui est envoyé sur l'entrée "diviseur" du circuit de division.

L'opération de quantification est, quant à elle destinée, on le sait, à convertir la valeur normalisée de chaque coefficient, exprimée avec une virgule flottante, en une valeur entière, soit par un simple arrondi, soit de préférence par troncature, en prenant la partie entière de la valeur avant quantification. Il est bien évident que, soumises à une telle quantification, un certain nombre de valeurs comprises entre 0 et 1 sont remplacées par la valeur 0, ce qui diminue le nombre de coefficients significatifs à transmettre et va donc dans le sens de la compression de données recherchée. Cette opération de quantification peut être linéaire ou au contraire à pas variable.

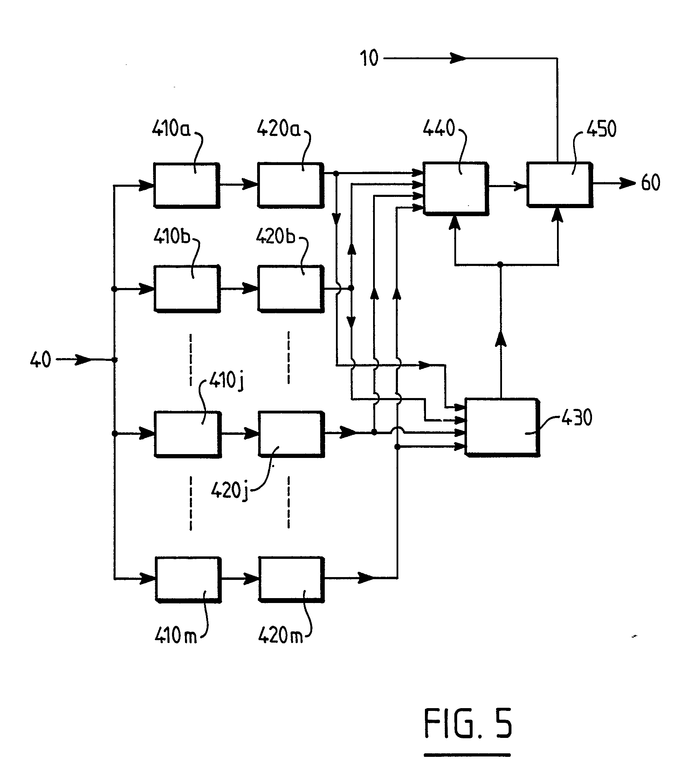

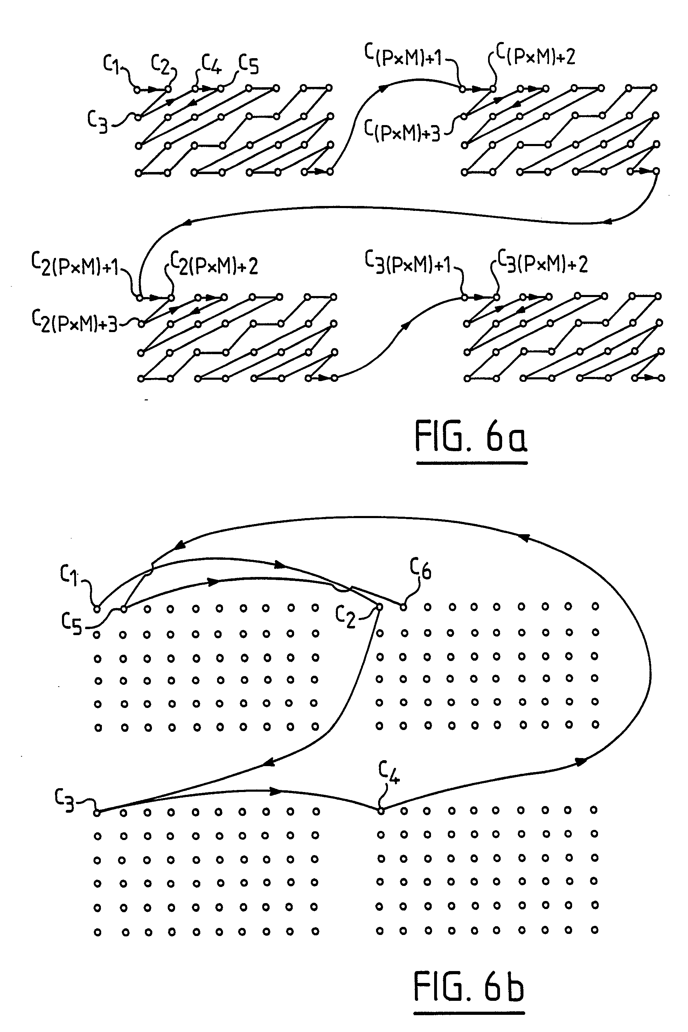

La sortie du circuit de normalisation et de quantification 40 est alors envoyée vers un circuit de codage 50 qui transmet, pour chaque valeur quantifiée non nulle, d'une part un mot parmi un jeu prédéfini de mots, dénommé code d'Huffman et stocké dans une mémoire, et d'autre part un autre mot représentant l'adresse de la valeur codée. Cette adresse est définie le long d'un balayage monodimensionnel du bloc tridimensionnel, par le codage de la longueur des suites de valeurs nulles. Un tel circuit de codage à longueur variable est de type classique. A sa place, on peut prévoir également, comme le montre l'exemple de réalisation de la figure 5, un circuit de codage comprenant m voies en parallèle, recevant chacune toutes les valeurs à coder. Ces valeurs sont, plus précisément, envoyées à un circuit de mémorisation 410a, 410b,..., 410j,...,410m selon la voie, circuit qui comprend lui-même deux mémoires fonctionnant en bascule : pour un bloc tridimensionnel donné, les valeurs sont écrites dans l'une de ces deux mémoires, pendant que les valeurs du bloc précédent sont lues dans l'autre mémoire dans un ordre correspondant au nouveau balayage. Les figures 6a et 6b représentent deux types de balayage pour cette lecture. Celui de la figure 6a permet de minimiser le débit pour les blocs de contenu fixe, tandis que celui de la figure 6b est intéressant sur les parties mobiles. La sortie de chaque circuit de mémorisation 410a à 410m est envoyée à un circuit 420a à 420m associé, ces circuits associés étant les circuits codeurs proprement dits qui réalisent le codage à longueur variable de la manière décrite dans le brevet US-A-4394774. Les différentes sorties des circuits 420a à 420m sont envoyées au circuit 430 de comptage et de sélection. Celui-ci compte pour chaque bloc tridimensionnel le nombre de bits utilisés pour coder le bloc pour chaque balayage, puis détermine le balayage qui minimise le débit pour chaque bloc tridimensionnel, commande la sortie du circuit d'aiguillage 440, qui avait stocké les bits sortant des divers circuits codeurs et assure le transfert, du circuit d'aiguillage 440 vers un circuit de multiplexage 450, des bits correspondant au meilleur codage du bloc tridimensionnel. Le circuit de multiplexage 450 multiplexe ces bits avec l'index du balayage choisi, qui doit être transmis au dispositif de décodage pour reconstruire le bloc, et assure également la transmission, au début de chaque groupe de N images, des vecteurs de déplacement principal déterminés pour ces images.

Le dispositif de codage comprend enfin, en sortie du circuit de codage 50, une mémoire de régulation de débit 60 qui garantit que le débit de sortie est constant et qui est réalisée de la manière décrite dans le brevet US-A-4394774.

Le dispositif de décodage (voir la figure 2) comprend d'abord une mémoire-tampon 70 similaire à la mémoire 60 du dispositif de codage, puis un circuit de décodage 80 réalisé de la manière décrite dans le brevet US-A-4394774. Le décodage à longueur variable ainsi prévu permet de récupérer l'index du balayage choisi pour chaque bloc tridimensionnel et les déplacements principaux qui sont nécessaires à la reconstitution des images. Un circuit 90 de quantification et normalisation inverses réalise la conversion de balayage à l'aide de deux mémoires en bascule en permutant les générateurs d'adresses d'un circuit de mémorisation du type 410 (figure 5) et la reconstruction des valeurs des coefficients à partir des valeurs transmises par reconstruction des pas de quantifications des coefficients à l'aide de l'état de la mémoire de régulation de débit 60 utilisée à l'émission, de la position du coefficient, et du contenu du bloc (après classification). Le circuit de transformation 100 est identique au circuit 30 mais réalise cette fois une transformation orthogonale inverse. Enfin un circuit 110, de structure similaire à celle du circuit 20 en permutant les générateurs d'adresses lecture et écriture, reconstitue le balayage ligne standard, les vecteurs de déplacement principal correspondant à ces images finales (et provenant du circuit de décodage 80) étant identiques à ceux stockés lors du codage des N images.

Bien entendu la présente invention n'est pas limitée aux exemples de réalisation qui viennent d'être décrits et représentés, à partir desquels des variantes peuvent être proposées sans pour cela sortir du cadre de l'invention.

On notera en particulier que, si les signaux vidéo numériques à traiter sont de format entrelacé, les étapes d'estimation de mouvement principal et de conversion de balayage, s'adressant à des signaux de format non entrelacé, sont précédées d'une étape de conversion de format entrelacé en format non entrelacé. Dans la mise en oeuvre du procédé de codage, le dispositif de codage comprend alors, en tête, un circuit de conversion de format entrelacé en format non entrelacé.

Par ailleurs, il est manifeste, également, que le procédé et le dispositif de codage selon l'invention peuvent être utilisés avec d'autres types de transformation orthogonale, par exemple des transformations de Hadamard ou de Haar, ou même avec des transformations orthogonales qui sont de type différent selon la direction considérée, par exemple et de façon non limitative avec des transformations en cosinus discret (DCT) pour les directions contenues dans le plan de l'image et avec une transformation de Hadamard pour la troisième direction selon l'axe temporel.

**Revendications**

1. Procédé de codage d'images converties en signaux vidéo numériques selon un format composé de blocs tridimensionnels desdits signaux, caractérisé en ce qu'il comprend les étapes préalables suivantes :

(a) estimation de mouvement principal d'image à image pour associer à chaque image un vecteur de déplacement, par rapport à l'image précédente, ce vecteur dit principal étant celui pour lequel la différence d'image à image est minimale, et ;

(b) conversion de balayage, en vue d'une délimitation du format des blocs tridimensionnels par division de la suite des signaux vidéo correspondant aux images en groupes correspondant chacun à N images consécutives et définition, à l'intérieur de chacun de ces groupes, desdits blocs tridimensionnels à partir d'une part de M lignes et de P points par ligne dans le plan des images et d'autre part de N plans successifs correspondant aux N images du groupe, les N blocs bidimensionnels de M lignes x P points qui composent chaque bloc tridimensionnel d'un même groupe étant, d'une image à la suivante, décalés spatialement dudit vecteur de déplacement estimé pour chaque image.

2. Procédé de codage selon la revendication 1, caractérisé en ce que les étapes préalables d'estimation de mouvement principal et de conversion de balayage sont précédées d'une étape de conversion de format entrelacé en format non entrelacé.

3. Dispositif de codage d'images converties en signaux vidéo numériques selon un format composé de blocs tridimensionnels desdits signaux, ledit dispositif comprenant notamment un circuit de codage de valeurs numériques représentatives desdits signaux, caractérisé :
- en ce qu'il comprend également, préalablement à ce circuit, un circuit d'estimation de mouvement principal d'image à image et un circuit de conversion de balayage ;
- en ce que ledit circuit d'estimation de mouvement principal comprend lui-même un registre de stockage, à partir des échantillons d'entrée qu'il reçoit, d'échantillons représentatifs de chaque image, une première et une deuxième mémoires pour effectuer en alternance l'écriture, dans l'une d'elles, de l'ensemble des échantillons représentatifs d'une image dite image courante et, simultanément, la lecture, dans l'autre des deux mémoires, des échantillons représentatifs d'une image dite image précédemment écrite, un soustracteur de calcul d'erreur inter-image par différence entre les échantillons lus et les échantillons d'entrée correspondants, un circuit de calcul de valeur absolue, un circuit de calcul d'erreur cumulée, et un circuit de détermination d'erreur cumulée minimale et de calcul du déplacement associé à ladite erreur cumulée minimale, dont la sortie est un vecteur de déplacement de l'image courante par rapport à l'image précédente et est fournie d'une part au circuit de conversion de balayage et d'autre part au circuit de codage ;
- en ce que ledit circuit de conversion de balayage comprend une troisième et une quatrième mémoires de stockage d'échantillons d'entrée en nombre correspondant à la longueur temporelle souhaitée pour les blocs tridimensionnels, lesdites mémoires fonctionnant également en bascule, et un circuit de constitution desdits blocs tridimensionnels par association, en nombre correspondant à ladite longueur temporelle de ces blocs, de blocs spatiaux bidimensionnels décalés, l'un par rapport au suivant, du vecteur de déplacement correspondant déterminé par le circuit d'estimation de mouvement principal.

4. Dispositif de codage selon la revendication 3, caractérisé en ce que ces circuits d'estimation de mouvement principal et de conversion de balayage sont précédés d'un circuit de conversion de format entrelacé en format non entrelacé.

5. Dispositif de codage selon l'une des revendications 3 et 4, caractérisé en ce que le registre de stockage d'échantillons représentatifs est commandé par une porte ET logique, elle-même reliée à la sortie de deux circuits de division de la fréquences des points d'image et de la fréquence ligne, et en ce que les sorties desdits circuits de division sont reliées au circuit de calcul de déplacement.

6. Dispositif de décodage de signaux vidéo numériques ayant été codés, avant transmission ou enregistrement, à l'aide d'un dispositif de codage comprenant, avant le codage lui-même, des moyens de définition, à l'aide d'au moins une information de mouvement d'image à image, de blocs de données tridimensionnels associant dans N images successives N blocs bidimensionnels de M lignes et P points par lignes de mêmes dimensions spatiales mais spatialement décalés, d'une image à la suivante, en fonction de ladite information de mouvement correspondante, lesdites informations de mouvement étant également codées et transmises, caractérisé en ce qu'il comprend une mémoire-tampon recevant les signaux transmis, un circuit de décodage de ces signaux selon un traitement réciproque de celui effectué pour le codage à l'émission et un circuit de reconstitution de balayage ligne à partir d'une part des signaux vidéo décodés correspondant auxdits blocs tridimensionnels et d'autre part des informations de mouvement ayant délimité le format desdits blocs.

FIG. 1

FIG. 2

FIG. 3

FIG. 4

FIG. 5

FIG. 6a

FIG. 6b

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | ICASSP 82 - PROCEEDINGS OF THE IEEE INTERNATIONAL CONFERENCE ON ACOUSTICS, SPEECH AND SIGNAL PROCESSING, Paris, 3-5 mai 1982, vol. 1 des 3, pages 448-451, IEEE, New York, US; M. GÖTZE et al.: "An adaptive interframe transform coding system for images" * En entier * --- | 1,3,6 | H 04 N 7/133 |
| A | IEEE TRANSACTIONS ON COMMUNICATIONS, vol. COM-25, no. 11, novembre 1977, pages 1323-1329, New York, US; T.R. NATARAJAN et al.: "On interframe transform coding" * En entier * --- | 1,3,6 | |
| A | IEE PROCEEDINGS, section A à I, vol. 133, no. 5, partie F, août 1986, pages 482-487, Stevenage, Herts, GB; M. GOLDBERG et al.: "Image sequence coding by three-dimensional block vector quantisation" * En entier * --- | 1,3,6 | **DOMAINES TECHNIQUES RECHERCHES (Int. Cl.4)**<br><br>H 04 N |
| A | ICASSP 83 - PROCEEDINGS OF THE IEEE INTERNATIONAL CONFERENCE ON ACOUSTICS, SPEECH AND SIGNAL PROCESSING, Boston, Massachusetts, 14-16 avril 1983, vol. 3 des 3, pages 1225-1227, IEEE, New York, US; G. OCYLOK: "A comparison of interframe coding techniques" * En entier * --- -/- | 1,3,6 | |

Le présent rapport a été établi pour toutes les revendications

| Lieu de la recherche | Date d'achèvement de la recherche | Examinateur |
|---|---|---|
| LA HAYE | 05-06-1989 | VERSCHELDEN J. |

EPO FORM 1503 03.82 (P0402)

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | IEEE TRANSACTIONS ON COMMUNICATIONS, vol. COM-25, no. 11, novembre 1977, pages 1329-1338, New York, US; J.A. ROESE et al.: "Interframe cosine transform image coding" --- | | |
| A | US-A-4 691 329  (JURI et al.) --- | | |
| A | US-A-4 704 628  (CHEN et al.) ----- | | |

**DOMAINES TECHNIQUES RECHERCHES (Int. Cl.4)**

Le présent rapport a été établi pour toutes les revendications

| Lieu de la recherche | Date d'achèvement de la recherche | Examinateur |
|---|---|---|
| LA HAYE | 05-06-1989 | VERSCHELDEN J. |

EPO FORM 1503 03.82 (P0402)